# EUROPEAN PATENT APPLICATION

(11) **EP 1 306 612 A1**
(43) Date of publication of application: **02.05.2003**
(21) Application number: 01125144.4
(22) Date of filing: 23.10.2001
(51) Int. Cl.: F21V 14/02, B60Q 1/14

(54) **Switching device for selection of high/low beam**

(71) Applicant: Jong Huang, Yu-Hua, Chungli City, Tao Yuan Hsien, Taiwan (TW)
(72) Inventor: Jong Huang, Yu-Hua, Chungli City, Tao Yuan Hsien, Taiwan (TW)
(74) Representative: Grünecker, Kinkeldey, Stockmair & Schwanhäusser Anwaltssozietät

(57) **Abstract**

A switching device for selection of high/low beam has a bulb base (2) set in a lamp shield (5) for accommodating a lighting element (3), wherein the bulb base (2) is connected with an electromagnetic valve (4), which is turned electrically on or off to shorten or lengthen the distance between the lighting element (3) and a reflective surface (51) and thereby regulate the high or the low beam of an automobile's headlamp.

## Description

### FIELD OF THE INVENTION

This invention relates generally to a switching device for selection of high/low beam, more particularly, it relates to a device for controlling the distance between a light source and a reflector so as to select high/low beam of an automobile's headlamps.

### BACKGROUND OF THE INVENTION

The projecting distance of an automobile's headlamp is adjustable by switching its high/low beam according to the road conditions, in nighttime particularly.

A conventional headlamp is equipped with two sets of tungsten filament in a bulb, including an unshielded first set and a partly shielded second set. When the first set of tungsten filament is lightened, all its light is thoroughly projected onto a concave arcuate surface in the headlamp and reflected as a high beam to project onwards farther. On the other hand, when the second set of tungsten filament is lightened, only a part of unshielded light is projected onto the concave arcuate surface and reflected as a low beam to project relatively nearer.

The conventional headlamp can be basically switched over between a high and a low beam by using a single bulb in the headlamp though, the intensity thereof is more or less not strong enough, thus some high-level automobiles are fitted with a pair of high-pressure discharge bulbs, which comprises an airtight light discharge container and a gas filler including a metallic compound and a rare gas element, wherein the metallic compound is vaporized under normal conditions to decompose and release Xenon particles for light emission.

However, as the pair of high-pressure discharge bulbs is sealed in a closed container, it is impossible to switch the headlamp between high/low beams, hence, every headlamp must be equipped with a set of high and low beam bulbs that would entail greater expense and cut down the automobile's internal space.

In view of abovesaid imperfection, the inventor is to provide a switching device for selection of high/low beam of automobile headlamps, wherein each headlamp contains only a high-pressure discharge bulb.

### SUMMARY OF THE INVENTION

The primary object of this invention is to provide a switching device for selection of high/low beam, wherein a given electromagnetic valve is turned electrically on to generate electromagnetic force to attract a bulb base in a lamp shield to thereby change the distance between a lighting element and a reflective surface and obtain the effect of switching high/low beam of a headlamp.

In order to realize abovesaid object, the switching device for selection of high/low beam of this invention has the bulb base set in the lamp shield for accommodating the lighting element, wherein the bulb base is connected with the electromagnetic valve, which is turned electrically on or off to shorten or lengthen the distance between the lighting element and the reflective surface and thereby regulate the high beam or the low beam of the headlamp.

For more detailed information regarding advantages or features of this invention, at least an example of preferred embodiment will be elucidated below with reference to the annexed drawings.

### BRIEF DESCRIPTION OF THE DRAWINGS

The related drawings in connection with the detailed description of this invention to be made later are described briefly as follows, in which:
Fig. 1 is a cutaway sectional view of this invention;
Fig. 2 is a schematic view showing the action of this invention in Fig. 1; and
Fig. 3 is an exploded view showing components of this invention in three dimensions.

### DETAILED DESCRIPTION OF THE INVENTION

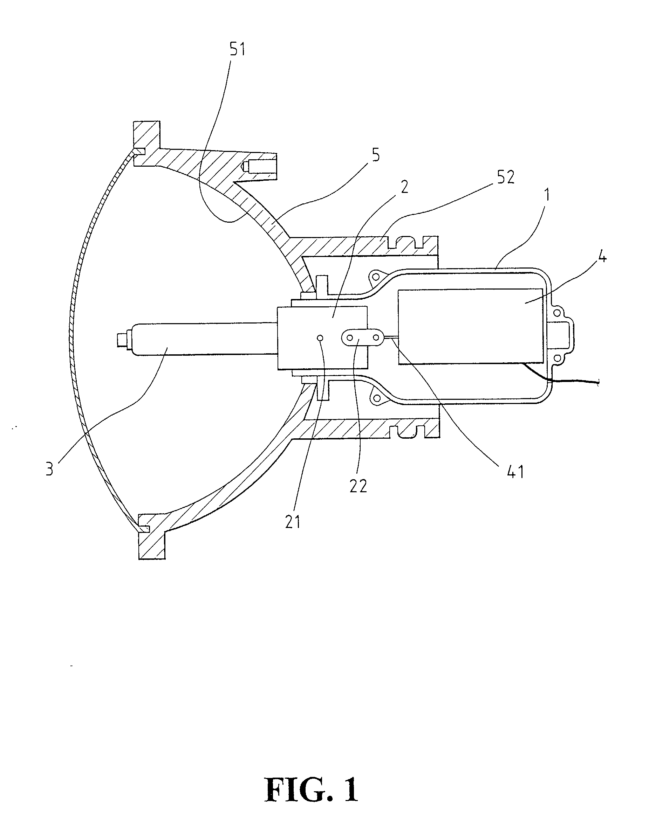

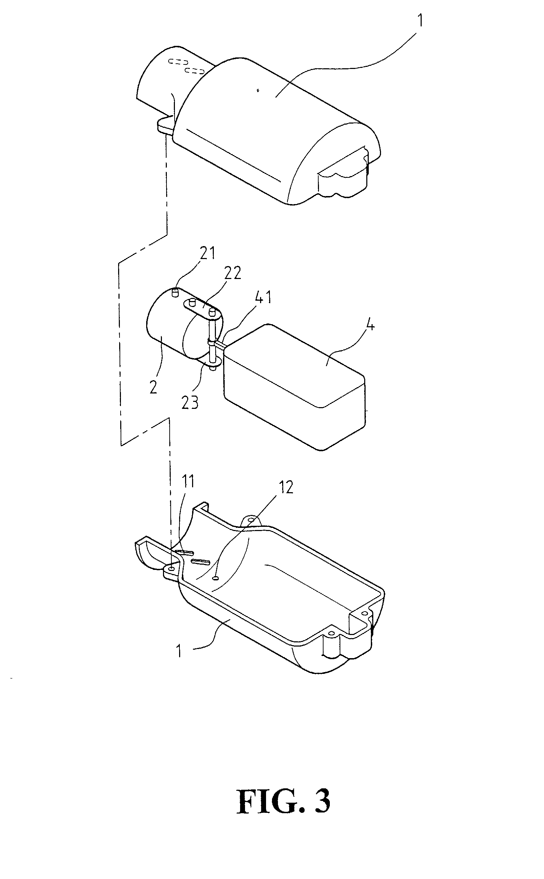

As illustrated in Figs. 1 through 3, a switching device for selection of high/low beam of this invention comprises at least: a casing **1,** a bulb base **2,** a lighting element **3**, an electromagnetic valve **4**, and a lamp shield **5**.

The lamp shield **5** contains a concave arcuate reflective surface **51** and a hollow cylindrical end **52**.

The casing **1** is composed of two corresponding halves, wherein each half of the casing **1** has a plurality of guiding slots **11** in its inner wall at corresponding positions. The bulb base **2** is arranged for bearing the lighting element **3**, which could be a high-pressure discharge bulb, or an arbitrary lighting bulb or tube. A plurality of protruding rods **21** is formed on the outer wall of the bulb base **2** at corresponding opposite positions and is movable freely in and along respective guiding slots **11,** wherein two protruding rods **21** at opposite positions are further connected with a link lever **22** respectively and one end of the link levers **22** are jointed commonly with an interactive shaft **23.**

The electromagnetic valve **4** is located inside the casing **1,** wherein a driving shaft **41** is connected with the interactive shaft **23**.

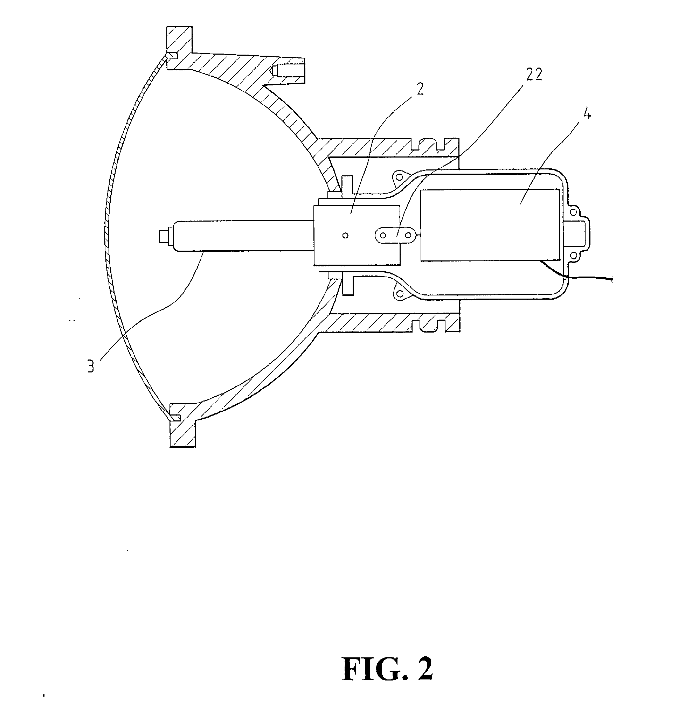

By taking advantage of abovesaid architecture, the electromagnetic valve **4** is turned electrically on to generate electromagnetic force to attract the driving shaft **41** to withdraw backwards and the bulb base **2** is pulled backwards via the link levers **22** (shown in Fig. 2). During the movement of the bulb base **2**, the protruding rods **21** are also moved in the guiding slots **11** to avoid arbitrary rotation of the bulb base **2** such that the distance between the lighting element **3** and the reflective surface **51** is shortened to enable the reflective surface **51** to serve for a high beam source that can project light much farther.

On the contrary, when the electromagnetic valve **4** is turned electrically off, a spring member inside (not shown) will release the driving shaft **41** and let it go forwards such that the bulb base **2** is restored (as shown in Fig. 1) via the interactive shaft **23** and the link levers **22** to result in a lengthened distance between the lighting element **3** and the reflective surface **51** to serve for a low beam source that projects light nearer.

In the above described, at least one preferred embodiment has been described in detail with reference to the drawings annexed, and it is apparent that numerous variations or modifications may be made without departing from the true spirit and scope thereof, as set forth in the claims below.

## Claims

1. A switching device for selection of high/low beam, comprising:
a lamp shield;
a casing composed of two halves, wherein each half is provided with a plurality of guiding slots in its inner wall at corresponding positions;
a bulb base having a plurality of protruding rods formed on an outer wall thereof at corresponding opposite positions and mated with the guiding slots; and the bulb base being connected with a link lever on opposite sides respectively and jointed with an interactive shaft;
a lighting element installed on the bulb base; and
an electromagnetic valve having its driving shaft coupled to the interactive
shaft;
whereby the bulb base is driven to move backwards or forwards by the driving shaft depending on whether the electromagnetic valve is turned electrically on or off such that the distance between the lighting element and a reflective surface in the lamp shield is shortened or enlarged to form a high beam or a low beam of an automobile's headlamp.
